# EUROPEAN PATENT SPECIFICATION

(11) **EP 3 298 586 B1**
(45) Date of publication and mention of the grant of the patent: **23.03.2022**
(21) Application number: 16795993.1
(22) Date of filing: 18.05.2016
(51) Int. Cl.: G06T 15/02, G06Q 30/06

(54) **METHOD AND SYSTEM FOR RECOMMENDING FITTING FOOTWEAR**
VERFAHREN UND SYSTEM ZUM EMPFEHLEN VON PASSENDEN SCHUHEN
PROCÉDÉ ET SYSTÈME DE RECOMMANDATION DE CHAUSSURES APPROPRIÉES

(30) Priority: 18.05.2015 IN 2322CH2015
(43) Date of publication of application: 28.03.2018
(73) Proprietor: EMBL Retail Inc, West Sacramento, California 95691 (US)
(72) Inventor: GANESAN, Anand, Bangalore 560071 (IN); RAJE, Shabari, Bangalore 560071 (IN); KELKAR, Mukul, West Sacramento, California 95691 (US); SENTHIL NATHAN, Ponnuswamy, Chennai 600020 (IN)
(74) Representative: D Young & Co LLP
(86) International application number: PCT/IB2016/052898
(87) International publication number: WO 2016/185400

(56) References cited:
- US-A1- 2010 030 578
- US-A1- 2012 316 985
- US-B1- 6 289 107

## Description

### CROSS-REFERENCE TO RELATED APPLICATIONS:

This application claims priority to Indian Provisional Patent Application No. 2322/CHE/2015, filed on May 18, 2015.

### FIELD OF THE INVENTION:

The present invention generally relates to fitting footwear and more particularly to a method and system for recommending fitting footwear.

### BACKGROUND TO THE INVENTION:

Readymade footwear is generally purchased by users from retail stores. A user is typically faced with a task of obtaining a perfect fit as a human foot is a 3-dimensional object defined with numerous contours, shapes and volume. In an example, researchers in ergonomics estimate 18 to 23 measurements are required to reproduce the shapes and the volume of the human foot accurately and repeatedly as set forth in Waldemar Karwowski et al., "Human Factors and Ergonomics in Consumer Product Design: Methods and Techniques," page 366. Such measurements encapsulate information about the shapes and proportions of the human foot. Existing sizing systems for the human foot were developed 150 years ago with an assumption of physical trials and use either one or two dimensions to specify the human foot, thereby inaccurately specifying foot geometry. Remaining measurements, shapes and proportions are further left to interpretation of a footwear designer. The user, during shopping at a retail store, hence performs the physical trials of different footwear to verify dimensional, shape and proportional fits, which is a time-consuming and tedious task.

In the existing sizing systems, there is no uniform standard across continents and countries. Different countries maintain own sizing standards and manufacturers are not required to follow the sizing standards strictly. Hence, the shape and the volume of a footwear of a specific size varies from one manufacturer to another manufacturer as well as from one model to another model of one manufacturer. Footwear fitting is thereby a complex process usually carried out by the physical trials at the retail store. Some retail stores use three dimensional (3D) foot scanners to determine the fit information. However, such 3D foot scanners work on a size scale that again uses one or two dimensions to specify the human foot leading to inaccurate fit information.

With recent emergence of electronic commerce, physical trials of the footwear can be carried out at home and at expense of an electronic retailer. The users, however, generally go by size of current footwear while purchasing footwear, which could often lead to footwear returns (by up to 10-30% of sold goods). Also, most electronic retailers use a size chart that translates foot length to footwear size. However, the size chart is sometimes customized for each brand and again result in the footwear returns. Such returns increase costs of the electronic retailer selling the footwear. Further, a common misconception among the users and the retailers is that size of the foot is similar to size of the footwear, which may not be correct. The size of the foot is only an indicative figure to pick the footwear. As per an advisory note for proper footwear fit by American Orthopaedic Foot and Ankle Society, footwear size is a starting point in selecting an appropriate footwear. Each footwear is made for a specific foot type, shape and volume. For a given footwear size, the footwear is expected to fit only a segment of population that has same foot length and similar foot proportions and shapes.

US 2010/030578 A1 relates to online methods of collaboration in community environments. The methods and systems are related to an online apparel modeling system that allows users to have three-dimensional models of their physical profile created. Users may purchase various goods and/or services and collaborate with other users in the online environment.

### SUMMARY OF THE INVENTION:

The invention is defined by the appended independent claims. Particular aspects are set out in the dependent claims.

### BRIEF DESCRIPTION OF THE FIGURES:

The invention will be described and explained with additional specificity and detail with the accompanying figures in which:
FIG. 1 is an example representation of an environment, in accordance with an embodiment;
FIG. 2A illustrates a front perspective view of a user capturing a first still image of a foot with a user device, in accordance with one embodiment;
FIG. 2B illustrates a first still image of the foot, in accordance with one embodiment;
FIG. 3A illustrates a front perspective view of a user capturing a second still image of a foot with a user device, in accordance with one embodiment;
FIG. 3B illustrates a second still image of the foot, in accordance with one embodiment;
FIG. 4A illustrates a front perspective view of a user capturing a third still image of a foot with a user device, in accordance with one embodiment;
FIG. 4B illustrates a third still image of the foot, in accordance with one embodiment;
FIGS. 5A - 5D illustrate front perspective views of a user capturing still images of a foot placed proximate to different standard reference objects, in accordance with various embodiments;
FIG. 6 illustrates an example flow diagram of a method of recommending fitting footwear, in accordance with an embodiment;
FIG. 7 illustrates an example flow diagram of a method of generating a foot geometric profile, in accordance with an embodiment;
FIG. 8 illustrates an example flow diagram of a method of generating a footwear profile, in accordance with an embodiment;
FIG. 9 illustrates an example flow diagram of a method of identifying at least one fitting footwear, in accordance with an embodiment;
FIG. 10 shows a sample example representation of a foot geometric profile, in accordance with an embodiment; and
FIG. 11 illustrates an example representation of a catalog listing page, in accordance with an embodiment;
FIG. 12 illustrates an example representation of a product page, in accordance with an embodiment;
FIG. 13A is an example representation of a fitting footwear in a 2D fitting image, in accordance with an embodiment;
FIG. 13B is an example representation of a fitting footwear in a 3D fitting image, in accordance with an embodiment;
FIG. 14 illustrates a block diagram of an electronic device, in accordance with one embodiment.

Further, skilled artisans will appreciate that elements in the figures are illustrated for simplicity and may not have been necessarily been drawn to scale. Furthermore, in terms of the construction of the device, one or more components of the device may have been represented in the figures by conventional symbols, and the figures may show only those specific details that are pertinent to understanding the embodiments of the present invention so as not to obscure the figures with details that will be readily apparent to those of ordinary skill in the art having benefit of the description herein.

### DESCRIPTION OF THE INVENTION:

For the purpose of promoting an understanding of the principles of the invention, reference will now be made to the embodiment illustrated in the figures and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components. Appearances of the phrase "in an embodiment", "in another embodiment" and similar language throughout this specification may, but do not necessarily, all refer to the same embodiment.

Unless otherwise defined, all technical and scientific terms used herein have the same meaning as commonly understood by one of ordinary skill in the art to which this invention belongs. The system, methods, and examples provided herein are illustrative only and not intended to be limiting.

Embodiments of the present invention will be described below in detail with reference to the accompanying figures.

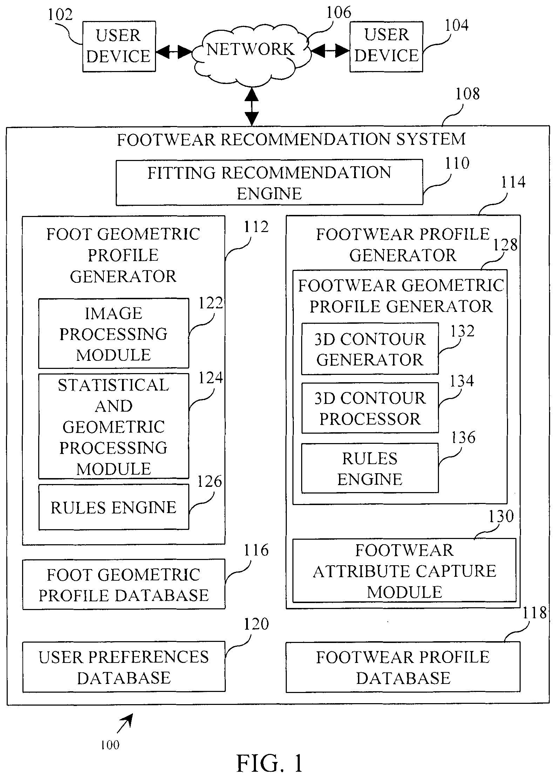

FIG. 1 is an example representation of an environment 100, in accordance with an embodiment. The environment 100 includes a plurality of user devices, for example a user device 102 and a user device 104, a network 106, and a footwear recommendation system 108. The footwear recommendation system 108 further includes a fitting recommendation engine 110, a foot geometric profile generator 112, a footwear profile generator 114, a foot geometric profile database 116, a footwear profile database 118, and a user preferences database 120. The foot geometric profile generator 112 includes an image processing module 122, a statistical and geometric processing module 124, and a rules engine 126. The footwear profile generator 114 includes a footwear geometric profile generator 128 and a footwear attribute capture module 130. The footwear geometric profile generator 128 includes a three dimensional (3D) contour generator 132, a 3D contour processor 134, and a rules engine 136.

The user device 102 and the user device 104 communicate with the footwear recommendation system 108 through the network 106. In some embodiments, the footwear recommendation system 108 is operated on a cloud platform. The user device 102 and the user device 104 are devices that are equipped with a camera or other imaging capability. Examples of the user device 102 and the user device 104 include, but are not limited to, a smartphone, a tablet, a laptop, a palmtop, a handheld device, a telecommunication device, a personal digital assistant (PDA), a desktop computer, and the like. Examples of the network 106 includes, but are not limited to, a Local Area Network (LAN), a Wireless Local Area Network (WLAN), a Wide Area Network (WAN), internet, a Small Area Network (SAN), and the like.

In some embodiments, the footwear recommendation system 108 can be operated in an online retail format, for example in an electronic commerce website, and an offline retail format, for example a retail store.

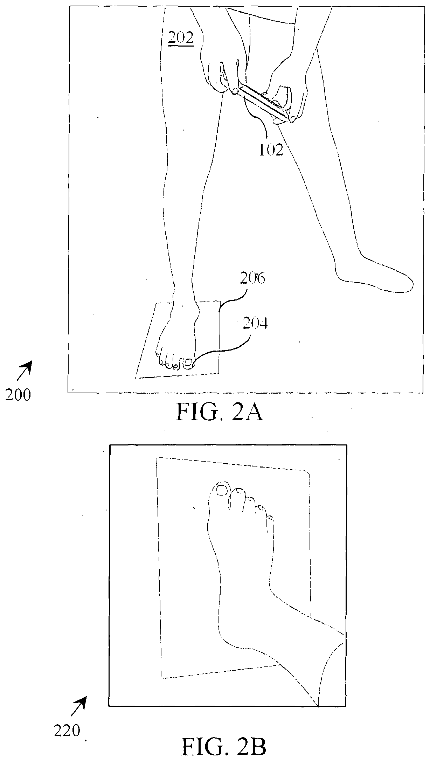

In one example, a user of the user device 102 (for example, a smartphone) captures a plurality of still images of at least one foot of the user through the user device 102. For instance, the user opens an application on the user device 102 and receives one or more instructions. The one or more instructions guides the user to click the plurality of still images of the at least one foot of the user. In some embodiments, the user device 102 or the user device 104 is either owned by the user or not owned by the user. Example representations of the plurality of still images that are captured by the user device 102 including position of the user device 102 are explained with reference to FIGS. 2A to 4B. The user subsequently uploads the plurality of still images using the user device 102 to the footwear recommendation system 108.

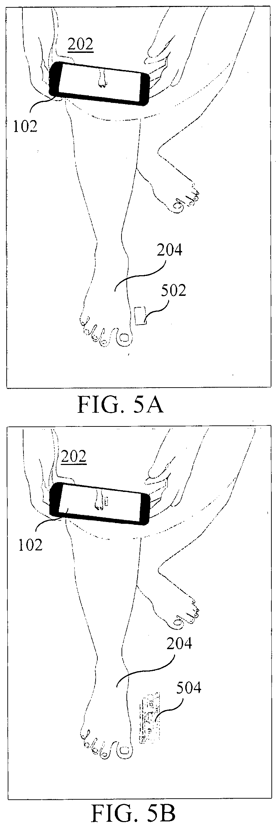

The footwear recommendation system 108 receives the still images from either the user device 102 or the user device 104 over the network 106. At least one still image of the one or more still images includes information of a standard reference object placed proximate to the at least one foot of the user. For instance, the standard reference object can include an A4 or letter size sheet of paper placed below a foot of the user (*see,* FIG. 2A to 4B). In another instance, the standard reference object can include a credit card, a currency note (for example, a United States (US) dollar bill), a currency coin (for example, a US quarter coin), a ruler of known dimensions, and the like, placed adjacent to the foot of the user (*see,* FIGS. 5A to 5D).

The foot geometric profile generator 112 is configured to process the plurality of still images. The image processing module 122 in the foot geometric profile generator 112 performs image processing on the plurality of still images to identify the standard reference object and the foot of the user. The statistical and geometric processing module 124 performs statistical and geometric processing on the plurality of still images. The statistical and geometric processing module 124 extracts information regarding camera position and scale of each still image after identifying the standard reference object. The rules engine 126 applies one or more rules to extract foot measurements and generate a foot type data. The one or more still images are processed by the foot geometric profile generator 112 to generate a digital geometric profile of the at least one foot of the user. Herein, the 'digital geometric profile' of the foot refers to a data set that represents foot measurements including, but not limited to, length, width, height, girth of the foot and angles between different points in the foot. The digital geometric profile includes information required to recreate foot geometry with reasonable accuracy. The foot geometric profile generator 112 further stores the digital geometric profile and the foot type data together in the foot geometric profile database 116 as a foot geometric profile.

The footwear profile generator 114 in the footwear recommendation system 108 generates a plurality of footwear profiles. For generation of a footwear profile, the footwear geometric profile generator 128 in the footwear profile generator 114 generates a footwear geometric profile. The 3D contour generator 132 in the footwear geometric profile generator 128 receives information of inner cavity or footwear last from a source. Examples of the source include, but are not limited to, a 3D model from a 3D scan, a 3D model provided either by a manufacturer or by digitizing the inner cavity or the footwear last of the footwear to generate a 3D contour map. The 3D contour processor 134 extracts a plurality of footwear measurements from the 3D contour map. The rules engine 136 applies one or more rules to extract footwear shapes and generate proportions from the plurality of footwear measurements to subsequently generate footwear type data. The footwear measurements and the footwear type data together are stored in the footwear profile database 118 as a footwear geometric profile.

The footwear attribute capture module 130 is further configured to capture one or more footwear attributes. The footwear profile database 118 further stores the footwear geometric profile, the one or more footwear attributes along with a unique identifier for the footwear as the footwear profile.

The footwear recommendation system 108 identifies at least one fitting footwear for the user based on the foot geometric profile. During such identification, the fitting recommendation engine 110 is configured to read the foot geometric profile database 116, the footwear profile database 118, and the user preferences database 120. The footwear recommendation system 108 captures user preferences through methods including manual profile update, recommendation feedback, past purchase update, and recommendation request, and the like and stores the user preferences in the user preferences database 120. The fitting recommendation engine 110 is configured to receive a recommendation request to provide recommendations. The fitting recommendation engine 110 is configured to receive a user request from the user and provide a fit information and a fit quality score. The fitting recommendation engine 110 also compares the foot geometric profile with a plurality of footwear profiles.

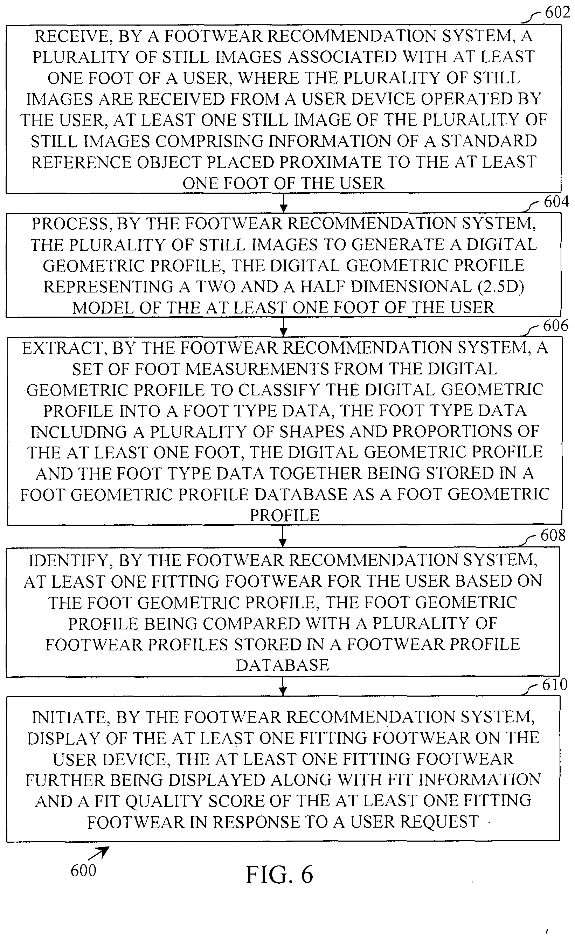

The method of operation of the footwear recommendation system 108 and corresponding components are described in detail with reference to FIGS. 6 to 9.

FIG. 2A illustrates a front perspective view 200 of a user 202 capturing a first still image 220 of a foot 204 with a user device, for example the user device 102 of FIG. 1, in accordance with one embodiment. FIG. 2B illustrates the first still image 220 of the foot 204, in accordance with one embodiment.

In an example, if the user 202 is using a mobile device as the user device 102, the user opens an application on the mobile device. The application is associated with the footwear recommendation system 108 of FIG. 1. The application guides the user 202 to place the foot 204 on a standard reference object 206, for example an A4 size paper or a letter size paper. The user 202 is then guided to click the first still image 220 of the foot 204 at a particular angle. For instance, the user 202 is instructed to angle the camera of the mobile device from a big toe side of the foot 204 at little above knee height at approximately a foot away from knee. The first still image 220 thus captured includes information of the standard reference object 206 and the foot 204 including heel to big-toe length and longitudinal arch length of the foot 204.

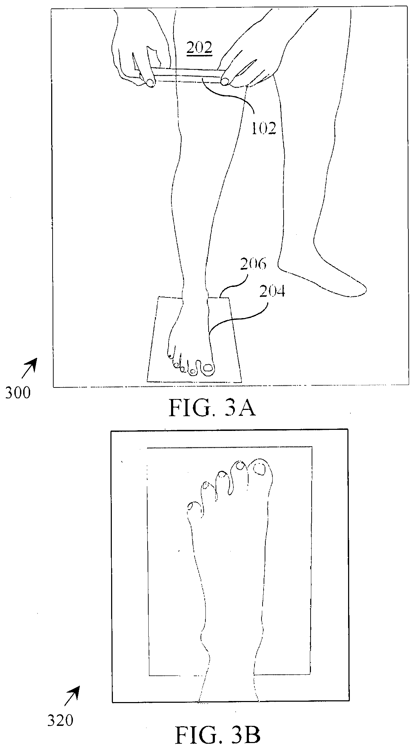

The first still image 220 is further uploaded to the footwear recommendation system 108 of FIG. 1 by the user 202 for further processing. An example representation of another still image of the foot 204 is explained with reference to FIGS. 3A to 3B.

FIG. 3A illustrates a front perspective view 300 of the user 202 capturing a second still image 320 of the foot 204 with the user device 104, in accordance with one embodiment. FIG. 3B illustrates the second still image 320 of the foot 204, in accordance with one embodiment.

In an example, after capturing the first still image 220, the user 202 receives further instructions from the application to capture the second still image 320. The user 202 is asked to continue placing the foot 204 on the standard reference object 206, for example the A4 size paper or the letter size paper. The user 202 is then guided to click the second still image 320 of the foot 204 at another particular angle. For instance, the user 202 is instructed to angle a camera of the mobile device from top of the foot 204 at little above knee height. The second still image 320 thus captured includes information of the standard reference object 206 and a two dimensional top view of the foot 204. The second still image 320 also includes information of ball width and toe box shape of the foot 204.

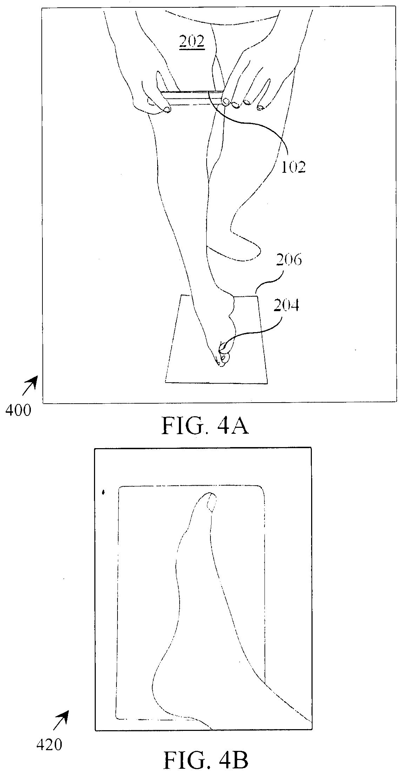

The second still image 320 is further uploaded to the footwear recommendation system 108 of FIG. 1 by the user 202 for further processing. An example representation of another still image of the foot 204 is explained with reference to FIGS. 4A to 4B.

FIG. 4A illustrates a front perspective view 400 of the user 202 capturing a third still image 402 of the foot 204 with the user device 102, in accordance with one embodiment. FIG. 4B illustrates the third still image 402 of the foot 204, in accordance with one embodiment.

In an example, after capturing the first still image 220 and the second still image 320, the user 202 receives further instructions from the application to capture the third still image 420. The user 202 is asked to incline the foot 204 on the standard reference object 206, for example the A4 size paper or the letter size paper. The user 204 can be standing or sitting in order to capture a medial view of the foot 204 in the third still image 420. The user 202 is then guided to click the third still image 420 of the foot 204 at another particular angle. For instance, the user 202 is instructed to angle the camera of the mobile device from top of the foot 204 at little above knee height. The third still image 420 thus captured includes information of the standard reference object 206 and a side elevation of the foot 204 (the big toe side). The third still image 420 also provides information regarding height of the foot 204 and arch height at different points of the foot 204. The third still image 420 further enables in determining girth of the foot 204 at different points.

The third still image 420 is further uploaded to the footwear recommendation system 108 of FIG. 1 by the user 202 for further processing. In some embodiments, the first still image 220, the second still image 320 and the third still image 420 are captured either in sequence or in another order and uploaded together to the footwear recommendation system 108. The first still image 220, the second still image 320 and the third still image 420 are processed to obtain the digital geometric profile representing the 2.5D model of the foot 204.

As illustrated in the FIGS. 2A - 4B, the foot 204 of the user 202 is placed on the standard reference object 206. However, in some embodiments, the foot 204 of the user 202 is also placed beside the standard reference object 206, for example the A4 size paper or the letter size paper.

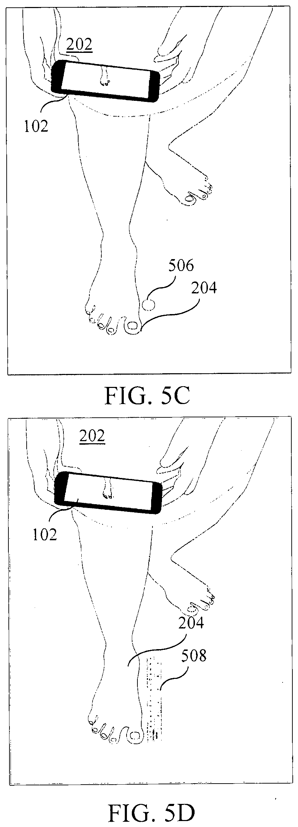

Some other example representations of the foot 204 of the user 202 being placed beside the standard reference object 206 are illustrated in FIGS. 5A to 5D. For instance, as illustrated in FIG. 5A, the standard reference object 206 is a credit card 502 and the foot 204 of the user 202 is placed beside the credit card 502. As illustrated in FIG. 5B, the standard reference object 206 is currency note 504, for example a united states (US) dollar bill, and the foot 204 of the user 202 is placed beside the currency note 504. As illustrated in FIG. 5C, the standard reference object 206 is a currency coin 506, for example a US quarter coin, and the foot 204 of the user 202 is placed beside the currency coin 506. As illustrated in FIG. 5D, the standard reference object 206 is a ruler 508 of a known size and the foot 204 of the user 202 is placed beside the ruler 508. The user is then guided to click one or more still images of the foot 204 at varying angles, as explained with reference to FIGS. 2A to 4B.

It should be noted that the standard reference object 206, camera angles, positions of the foot 204, and first still image to third still image as illustrated in FIGS. 2A-4B and FIGS. 5A - 5D are not limited to those shown and can include other standard reference objects, other camera angles, different positions of the foot 204 and different number of still images that can be taken for the left foot or right foot of the user 202 or both in sequence.

An example method of recommending fitting footwear is explained with reference to FIG. 6.

FIG. 6 illustrates an example flow diagram of a method 600 for recommending fitting footwear, in accordance with an embodiment. At step 602, the method 600 includes receiving a plurality of still images associated with at least one foot of a user, for example the foot 204 of the user 202 of FIG. 2A. The plurality of still images is received from a user device, for example the user device 102 or the user device 104, operated by the user. The plurality of still images is further received by a footwear recommendation system, for example the footwear recommendation system 108 of FIG. 1.

In some embodiments, user profile information of the user is also received along with the plurality of still images to determine a unique identifier for the user. Examples of the user profile information includes, but are not limited to, electronic mail of the user, phone number of the user, international mobile equipment identity (IMEI) number, and the like.

At least one still image of the plurality of still images includes information of a standard reference object, for example the standard reference object 206 of FIG. 2A. The standard reference object can be placed proximate to, for example below or beside, the at least one foot of the user. The standard reference object is associated with one or more standard dimensions. For instance, if the standard reference object is an A4 size paper, the standard dimensions are 210 × 297 milli meters (mm) or 8.27 × 11.69 inches. In another instance, if the standard reference object is a credit card, for example the credit card 502 of FIG. 5A, the standard dimensions are 85.60 × 53.98 mm (or 3.370 × 2.125 inches). The plurality of still images associated with the at least one foot of the user are captured by the user at varying angles and includes one or more foot measurements. The method of capturing the plurality of still images (for example, three still images) is explained with reference to FIGS. 2A - 4B and is not explained herein for sake of brevity.

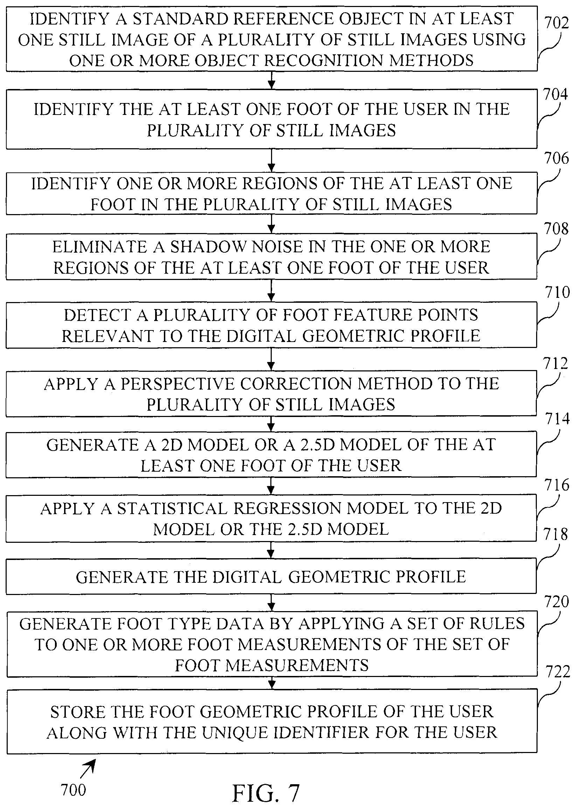

At step 604, the method 600 includes processing the plurality of still images to generate a digital geometric profile of the at least one foot of the user. In an example, the plurality of still images is processed by the footwear recommendation system. The digital geometric profile represents a two and a half dimensional (2.5D) model of the at least one foot of the user. In some embodiments, the digital geometric profile represents a two dimensional (2D) model of the at least one foot of the user. The method of processing the plurality of still images to generate the digital geometric profile is explained with reference to FIG. 7 and is not explained herein for sake of brevity.

At step 606, the method 600 includes extracting, by the footwear recommendation system, a set of foot measurements from the digital geometric profile to classify the digital geometric profile into a foot type data. The digital geometric profile and the foot type data together are stored in a foot geometric profile database, for example the foot geometric profile database 116 of FIG. 1, as a foot geometric profile. The method of extracting the set of foot measurements and generating the foot geometric profile is explained with reference to FIG. 7 and is not explained herein for sake of brevity.

At step 608, the method 600 includes identifying, by the footwear recommendation system, at least one fitting footwear for the user based on the foot geometric profile. The foot geometric profile is compared with a plurality of footwear profiles. The plurality of footwear profiles are stored in a footwear profile database, for example the footwear profile database 118 of FIG. 1.

The foot geometric profile database and the footwear profile database are read by the footwear recommendation system. A plurality of rules are applied to filter the at least one fitting footwear from the plurality of footwear based on user search parameters, and to generate a fit information and a fit quality score of the at least one fitting footwear. The at least one fitting footwear is ranked for display to the user by the footwear recommendation system.

At step 610, the method 600 includes initiating, by the footwear recommendation system, display of the at least one fitting footwear on the user device. In some embodiments, in response to a user request, the at least one fitting footwear can be displayed along with the fit information and the fit quality score of the at least one fitting footwear. An example method of processing the plurality of still images to generate the digital geometric profile, extract the set of foot measurements and generate the foot geometric profile is explained with reference to FIG. 7.

FIG. 7 illustrates an example flow diagram of a method 700 for processing the plurality of still images to generate a foot geometric profile, in accordance with an embodiment. The plurality of still images can be processed to generate the 2.5D model and one or more still images can be processed to generate the 2D model. The plurality of still images can be processed by a foot geometric profile generator, for example the foot geometric profile generator 112 of the footwear recommendation system 108 of FIG. 1.

At step 702, the method 700 includes identifying the standard reference object in the at least one still image of the plurality of still images. In an example, the standard reference object can be identified by using one or more object recognition methods. In one instance, an object recognition method for identifying edges of the A4 size paper with foot on the A4 size paper involves applying contextual information to a combination of segmentation, edge detection, shape based model matching, and intensity based image analysis techniques. In some embodiments, the standard reference object can be identified by using geometric pattern matching. Once the standard reference object is identified, information regarding ambience, camera position and scale of each image is extracted by the foot geometric profile generator.

At step 704, the method 700 includes identifying, by the footwear recommendation system, the at least one foot of the user in the plurality of still images. The at least one foot is one of a covered foot and an uncovered foot. The foot can be identified using one or more object recognition methods. In one instance, an object recognition method for identifying the foot involves applying contextual information to a combination of segmentation, edge detection, shape based model matching, and intensity based image analysis techniques.

At step 706, the method 700 includes identifying, by the footwear recommendation system, one or more regions of the at least one foot in the plurality of still images.

At step 708, the method 700 includes eliminating, by the footwear recommendation system, a shadow noise in the one or more regions of the at least one foot of the user. The shadow noise along with other noises in the one or more regions are removed after identification. Some examples of the noises include, but are not limited to, wrinkles, veins, patches, skin tone differences, tattoos, toe rings, anklets and nail colors. An example method used to eliminate the shadow noise along with the other noises at relevant points in the one or more regions include applying contextual information to a combination of intensity, chromaticity, and curvature analysis.

At step 710, the method 700 includes detecting, by the footwear recommendation system, a plurality of foot feature points relevant to the digital geometric profile. The foot feature points are detected based on the one or more regions of the foot and using foot geometry, foot proportion statistics, and curvature analysis. Herein, the 'foot feature points' refer to specific geometric signatures of the foot that identify anatomical landmarks of the foot.

In some embodiments, the foot feature points are extracted based on using predefined signatures in the one or more regions. Different foot measurements are extracted after identification of the foot feature points. Some examples of the foot measurements include, but are not limited to, big toe to heel point distance, medial ball to lateral ball point distance, medial or lateral ball points to heel point distance, medial ball point height, instep height and foot girths at different points (for example ball girth, waist girth and instep girth). Based on the plurality of still images received, extracted information will be either the 2D model or the 2.5D model of the foot. The 2D model includes actual measured linear or curvilinear dimensions whereas the 2.5D model includes both measured 2D dimensions and estimated three dimensional (3D) dimensions.

At step 712, the method 700 includes applying, by the footwear recommendation system, a perspective correction method to the plurality of still images to correct perspective distortion. In one instance, the perspective correction method includes applying projective geometry and homography techniques. At step 714, the method 700 includes generating, by the footwear recommendation system, the 2.5D model of the at least one foot of the user. Using the foot feature points, multiplicity of distances and angles are calculated and further used to generate the 2.5D model. In some embodiments, the 2D model is generated for the at least one foot of the user.

At step 716, the method 700 includes applying, by the footwear recommendation system, a statistical regression model to the 2.5D or the 2D model of the foot of the user. The statistical regression model corrects for systematic deviation to improve model accuracy.

At step 718, the method 700 includes generating, by the footwear recommendation system, the digital geometric profile representing the 2.5D model. In some embodiments, the digital geometric profile representing the 2D model is generated for the one or more still images. The digital geometric profile is generated by applying the perspective correction and the statistical regression model on data extracted from the plurality of still images. The digital geometric profile is a minimal data set required to reconstruct the foot geometry to an accuracy required for recommending fitting footwear. A set of foot measurements is extracted from the digital geometric profile to classify the digital geometric profile into a foot type data. The foot type data includes a plurality of shapes and proportions of the at least one foot. The method of extracting the set of foot measurements to subsequently generate and store the foot geometric profile is explained in steps 720 and 722.

At step 720, the method 700 includes applying a set of rules to one or more foot measurements of the set of foot measurements to derive the foot type data. The set of rules can be applied using a rule based engine. In one example, a combination of domain knowledge and data analysis of multiple foot profiles is used to build the rules based engine. Shapes are extracted and proportions of the foot are generated by the rules based engine. Examples of the shapes include, but not limited to, toe box shape, toe angles, medial to lateral ball angle and hind foot angle. Examples of the proportions of the foot (or ratios of different foot measurements) include, but not limited to, medial and dorsal aspect ratios of the foot. A combination of the shapes and the proportions constitute the foot type data.

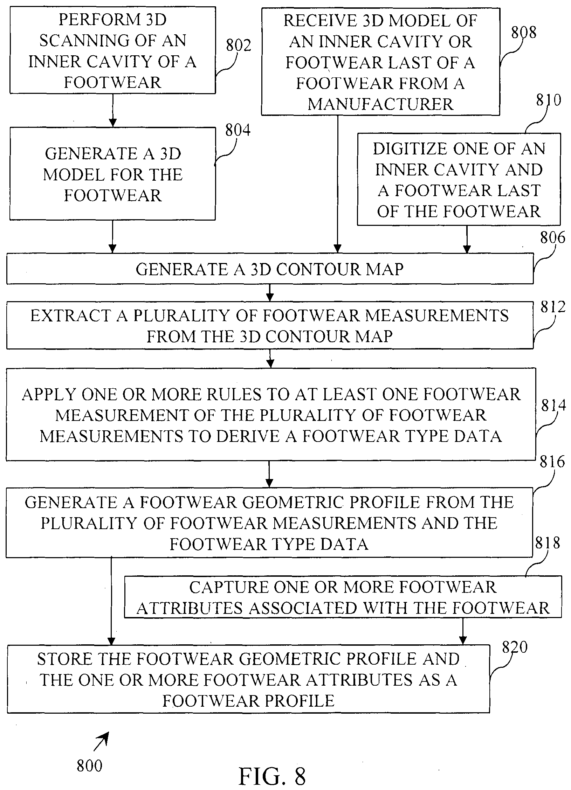

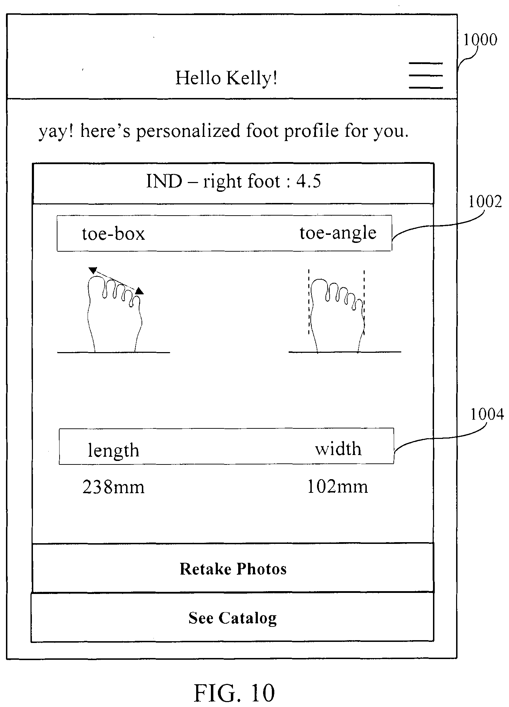

At step 722, the method 700 includes storing, by the footwear recommendation system, the set of foot measurements and the foot type data of the user along with the unique identifier for the user in the foot geometric profile database as the foot geometric profile. The foot geometric profile is further tagged with the unique identity of the user. The unique identity can include, but is not limited to, a code generated by the footwear recommendation system 108 or an email address or the phone number of the user. An example representation of a foot geometric profile 1000 that may be displayed to the user through the user device is illustrated in FIG. 10. The foot geometric profile 1000 includes the shapes 1002 (toe-box shape and toe-angle shape) along with the measurements 1004 (length and width) of the foot, for example a right foot. An example method of generating a footwear profile is explained with reference to FIG. 8.

FIG. 8 illustrates an example flow diagram of a method 800 for generating the footwear profile, in accordance with an embodiment. The at least one fitting footwear is selected for the user from a plurality of footwear. Geometric information regarding an inner cavity of each footwear of the plurality of footwear is captured as a footwear geometric profile into a footwear profile database, for example the footwear profile database 118 of FIG. 1. Footwear profiles for a plurality of footwear models corresponding to a plurality of footwear sizes are generated by the footwear profile generator.

At step 802, the method 800 includes performing 3D scanning of the inner cavity or a footwear last of a footwear. At step 804, the method 800 includes generating a 3D model for the footwear. A 3D contour map is subsequently generated, at step 806, by converting the 3D model of the inner cavity of the footwear.

In another embodiment, at step 808, the 3D model of the inner cavity or a footwear last of the footwear is received from a manufacturer or a footwear brand. A 3D contour map is subsequently generated, at step 806, by converting the 3D model of the inner cavity or the footwear last of the footwear.

In another embodiment, at step 810, the inner cavity or the footwear last of the footwear is digitized, for example using a 3D digitizer. A 3D contour map is subsequently generated, at step 806, by the footwear profile generator after such digitization. The 3D contour map is generated for one or more sizes of the plurality of footwear models.

At step 812, the method 800 includes extracting a plurality of footwear measurements from the 3D contour map. The plurality of footwear measurements define the footwear last. Some examples of the plurality of footwear measurements include, but are not limited to, ball girth, instep height, medial ball to heel length, back height, heel girth, and the like.

At step 814, the method 800 includes applying one or more rules to at least one footwear measurement of the plurality of footwear measurements to derive a footwear type data. By applying the rules, shapes and proportions of the footwear last are generated. The shapes include, but are not limited to, toe box type, angle between the ball points, and the like. The proportions include, width or instep height to stick length ratio, and the like. The footwear geometric profile is generated from the plurality of footwear measurements and the footwear type data, at step 816. The footwear geometric profile is further stored in a footwear profile database.

At step 818, the method 800 includes capturing one or more footwear attributes associated with the footwear. In an example, each footwear model of the plurality of the footwear is evaluated by a trained footwear design specialist to capture the one or more footwear attributes.

In some embodiments, the one or more footwear attributes can be captured by a footwear attribute capture module, for example the footwear attribute capture module 130 of FIG. 1. A footwear design specialist can use the footwear attribute capture module to capture the footwear attributes including style, materials, usage, construction and design variables for one or more footwear models.

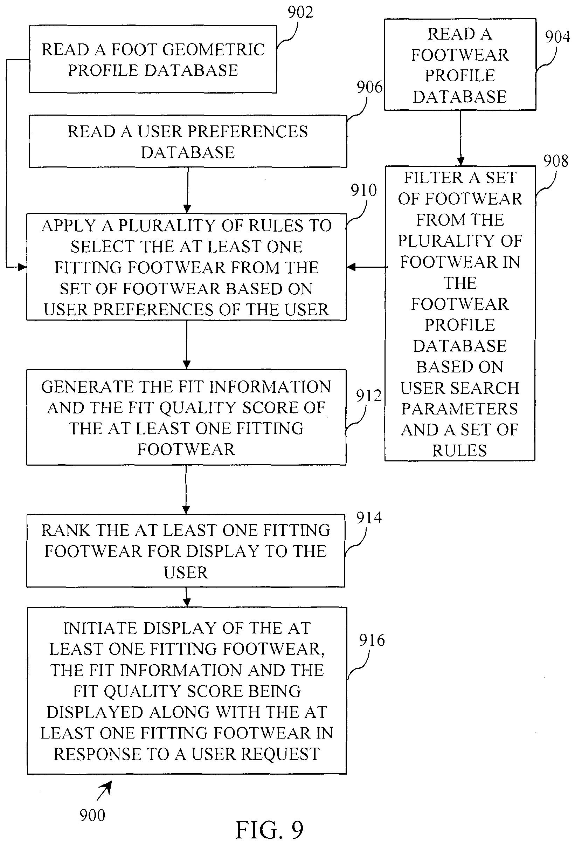

At step 820, the method 800 includes storing the footwear geometric profile, the one or more footwear attributes, and a unique identifier for the footwear as a footwear profile. The footwear profile is stored in the footwear profile database. An example method of identifying the at least one fitting footwear is explained with reference to FIG. 9.

FIG. 9 illustrates an example flow diagram of a method 900 for identifying the at least one fitting footwear, in accordance with an embodiment. The foot geometric profile and the footwear profile are generated in a one-time process for the user and for the footwear model respectively. The foot geometric profile of the user is stored along with a unique identifier for the user. The footwear profile is stored in the footwear profile database with the unique identifier for the footwear. With the unique identifier, the user can shop online or in a physical store using the footwear recommendation from the footwear recommendation system. If a retailer has installed the footwear recommendation system, the user can request footwear recommendation for a footwear model in the footwear profile database multiple times.

At step 902, the method 900 includes reading the foot geometric profile database. In an example, the foot geometric profile database is read by a fitting recommendation engine, for example the fitting recommendation engine 110 of the footwear recommendation system 108 of FIG. 1.

At step 904, the method 900 includes reading the footwear profile database. In an example, the footwear profile database is read by the fitting recommendation engine. At step 906, the method 900 includes reading a user preferences database, for example the user preferences database 120 of FIG. 1.

Subsequent to reading the footwear profile database, a set of footwear is filtered from the plurality of footwear in the footwear profile database, at step 908. The set of footwear is filtered based on a plurality of user search parameters and a set of rules.

In an example, a recommendation request is received by the fitting recommendation engine during reading of the footwear profile database along with the unique identifier for the footwear or criteria to filter the set of footwear. The user can request recommendation for one or more footwear models and the recommendation request can include information on how to choose footwear models from the footwear profile database. In one embodiment, the recommendation request can be for each footwear model in a retailer catalog. In another embodiment, the recommendation request is for a specific product. In yet another embodiment, the recommendation request can be specific search criteria based on the footwear attributes. The user can further submit a user request for additional information including the fit information and the fit quality score.

At step 910, the method 900 includes applying a plurality of rules to select the at least one fitting footwear from the set of footwear based on user preferences of the user. The user preferences are stored in a user preferences database, for example the user preferences database 120. The plurality of rules is applied by the footwear recommendation system for processing each footwear model at a time.

At step 912, the method 900 includes generating the fit information and the fit quality score of the at least one fitting footwear. The fit information and the fit quality score are generated for the at least one fitting footwear as well as for adjacent footwear sizes.

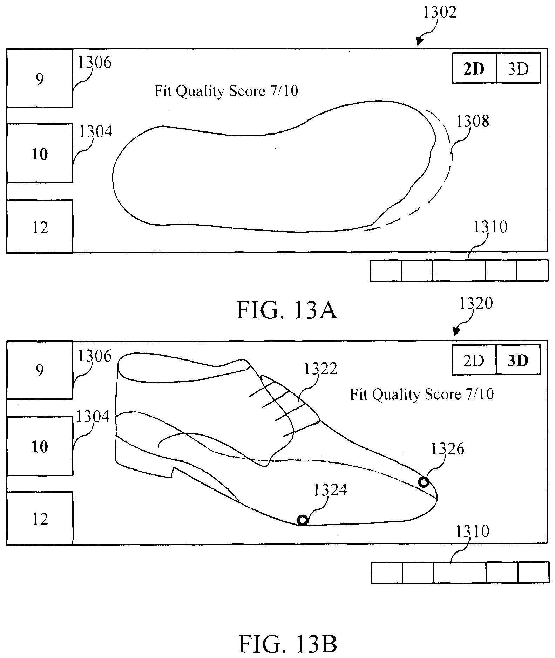

At step 914, the method 900 includes ranking the at least one fitting footwear for display to the user. In some embodiments, after the ranking, information regarding the foot type, the footwear type, and the footwear attributes is used to generate custom 2D and 3D display information for the user. An example representation of a fitting footwear in a 2D fitting image and a 3D fitting image is explained with reference to FIGS. 13A and 13B, respectively. At step 916, display of the at least one fitting footwear is initiated on the user device. Additionally, in response to a user request, the fit information and the fit quality score is displayed along with the at least one fitting footwear. The fit information is further customized for the user and the at least one fitting footwear.

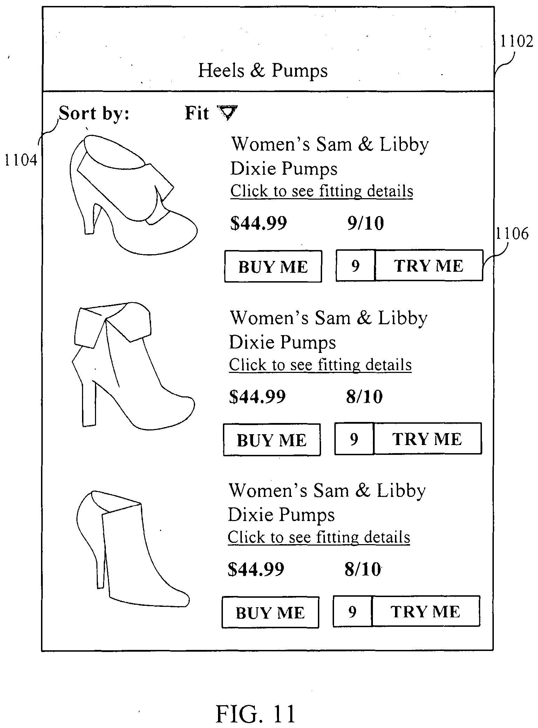

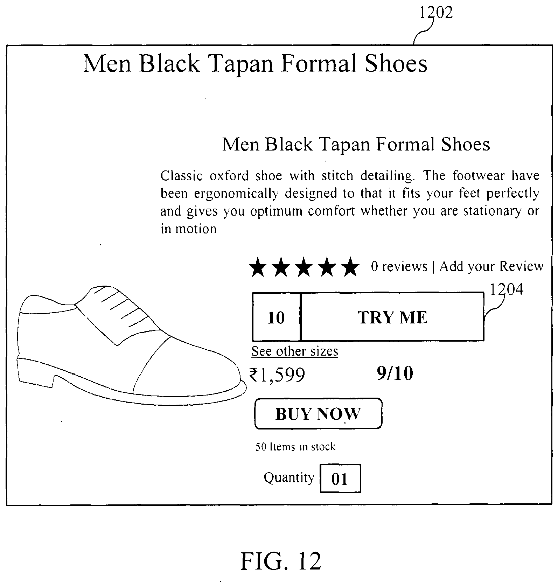

In some embodiments, the user is provided with fitting images of the fitting footwear in either a product page of an online retailer or an offline retailer. An example representation of a catalog listing page is explained with reference to FIG. 11. In another implementation, fitting footwear size can be provided to the user at the catalog listing page FIG. 11. An example representation of the product page is explained with reference to FIG. 12.

FIG. 11 is an example representation of a catalog listing page 1102. In the catalog listing page 1102, the user gets to use the fit information to either sort the footwear models by fit (*see,* 1104) or check fit quality of multiple footwear models in one screen. The user also gets to request the fitting recommendation engine 110 for the fit information and the fit quality score for each footwear model using widgets placed across each model, for example a widget 1106, in the catalog listing page 1102.

In some embodiments, the footwear recommendation system 108 can prompt the user for additional preferences including preference of fit, brand, shoe material, usage, occasion, shoe type, construction and other footwear attributes. Such additional preferences are captured in the user preferences database 120. Based on user preference entries in the user preferences database 120, the footwear recommendation system 108 adds one or more rules to the fitting recommendation engine 110 to ensure that such parameters are used to determine the fitting footwear, the fit information and the fit quality score. For instance, if the user has indicated a preference for a relaxed fit, the footwear recommendation system 108 uses a rule based engine to determine the fitting footwear with the relaxed fit.

FIG. 12 is an example representation of a product page 1202. In the product page 1202, selection buttons or menu of a size scale is replaced with an auto-populating widget 1204. Once the product page 1202 is uploaded, the auto-populating widget 1204 auto populates the product page 1202 with a recommended size, for example a size 10. The user can then click the auto-populating widget 1204 to generate a user request and to in turn receive the fit information and the fit quality score. The auto-populating widget 1204, when selected by the user, transmits the user request to the fitting recommendation engine 110. On receiving the user request, the fitting recommendation engine 110 provides the fit information and the fit quality score, for example as illustrated in FIG. 13A and FIG. 13B.

FIG. 13A and FIG. 13B are example representations of a 2D fitting image 1302 and a 3D fitting image 1320 including the fit information and the fit quality score, respectively. In the 2D fitting image 1302, the user is provided with a closest fitting footwear size 1304, an adjacent fitting size 1306, a colour coded fit information 1308, and a colour legend 1310. The colour legend 1310 is used to interpret whether the footwear is loose or tight or somewhere in middle in fitting points. In the 3D fitting image 1320, based on the footwear attributes, a 2D mesh model 1322 is extracted from the footwear profile database and fitting points (*see,* 1324 and 1326) are positioned as circles for the footwear and foot combination. The fitting points (*see,* 1324 and 1326) can be colored based on the fit information. The 2D fitting image 1302 and the 3D fitting image 1320 also provides the fit quality score to help the user determine quality of fit of recommended fitting footwear.

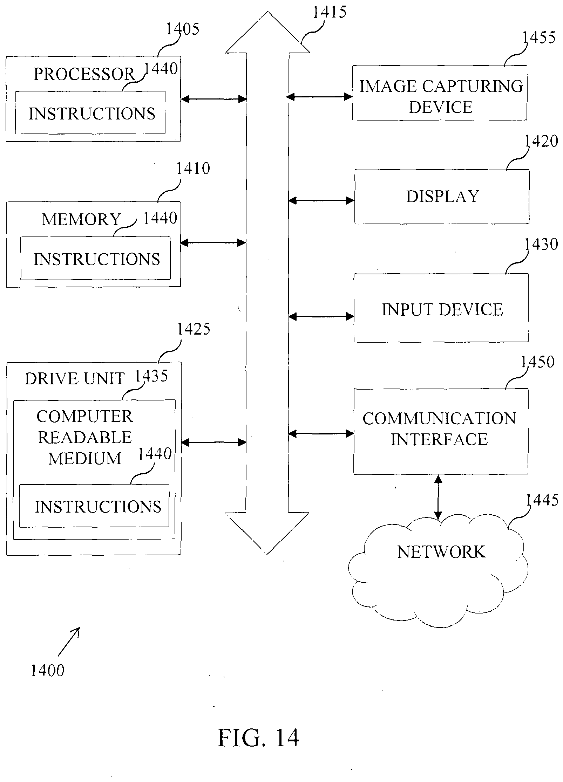

Referring to FIG. 14, a block diagram of an electronic device 1400 is illustrated, which is representative of a hardware environment for practicing the present invention. The electronic device 1400 can include a set of instructions that can be executed to cause the electronic device 1400 to perform any one or more of the methods disclosed. The electronic device 1400 may operate as a standalone device or can be connected, for example using a network, to other electronic devices or peripheral devices.

In a networked deployment of the present invention, the electronic device 1400 may operate in the capacity of a user device, for example the user device 102 or the user device 104 of FIG. 1, and a footwear recommendation system, for example the footwear recommendation system 108 of FIG. 1, in a server-client user network environment, or as a peer electronic device in a peer-to-peer (or distributed) network environment. The electronic device 1400 can also be implemented as or incorporated into various devices, such as a smart phone, personal computer (PC), a tablet, a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. Further, while a single electronic device 1400 is illustrated, the term "device" shall also be taken to include any collection of systems or sub-systems that individually or jointly execute a set, or multiple sets, of instructions to perform one or more computer functions.

The electronic device 1400 can include a processor 1405, for example a central processing unit (CPU), a graphics processing unit (GPU), or both. The processor 1405 can be a component in a variety of systems. For example, the processor 1405 can be part of a standard personal computer or a workstation. The processor 1405 can be one or more general processors, digital signal processors, application specific integrated circuits, field programmable gate arrays, servers, networks, digital circuits, analog circuits, combinations thereof, or other now known or later developed devices for analyzing and processing data. The processor 1405 can implement a software program, such as code generated manually (for example, programmed).

The electronic device 1400 can include a memory 1410, such as a memory 1410 that can communicate via a bus 1415. The memory 1410 can include a main memory, a static memory, or a dynamic memory. The memory 1410 can include, but is not limited to, computer readable storage media such as various types of volatile and non-volatile storage media, including but not limited to, random access memory, read-only memory, programmable read-only memory, electrically programmable read-only memory, electrically erasable read-only memory, flash memory, magnetic tape or disk, optical media and the like. In one example, the memory 1410 includes a cache or random access memory for the processor 1405. In alternative examples, the memory 1410 is separate from the processor 1405, such as a cache memory of a processor, the system memory, or other memory. The memory 1410 can be an external storage device or database for storing data. Examples include a hard drive, compact disc ("CD"), digital video disc ("DVD"), memory card, memory stick, floppy disc, universal serial bus ("USB") memory device, or any other device operative to store data. The memory 1410 is operable to store instructions executable by the processor 1405. The functions, acts or tasks illustrated in the figures or described can be performed by the programmed processor 1405 executing the instructions stored in the memory 1410. The functions, acts or tasks are independent of the particular type of instructions set, storage media, processor or processing strategy and can be performed by software, hardware, integrated circuits, firm-ware, micro-code and the like, operating alone or in combination. Likewise, processing strategies can include multiprocessing, multitasking, parallel processing and the like.

As shown, the electronic device 1400 can further include a display unit 1420, for example a liquid crystal display (LCD), an organic light emitting diode (OLED), a flat panel display, a solid state display, a cathode ray tube (CRT), a projector, a printer or other now known or later developed display device for outputting determined information. The display 1420 can act as an interface for a user to see the functioning of the processor 1405, or specifically as an interface with the software stored in the memory 1410 or in a drive unit 1425.

Additionally, the electronic device 1400 can include an input device 1430 configured to allow the user to interact with any of the components of the electronic device 1400. The input device 1430 can include a stylus, a number pad, a keyboard, or a cursor control device, for example a mouse, or a joystick, touch screen display, remote control or any other device operative to interact with the electronic device 1400.

The electronic device 1400 can also include the drive unit 1425. The drive unit 1425 can include a computer-readable medium 1435 in which one or more sets of instructions 1440, for example software, can be embedded. Further, the instructions 1440 can embody one or more of the methods or logic as described. In a particular example, the instructions 1440 can reside completely, or at least partially, within the memory 1410 or within the processor 1405 during execution by the electronic device 1400. The memory 1410 and the processor 1405 can also include computer-readable media as discussed above.

The present invention contemplates a computer-readable medium that includes instructions 1440 or receives and executes the instructions 1440 responsive to a propagated signal so that a device connected to a network 1445 can communicate voice, video, audio, images or any other data over the network 1445. Further, the instructions 1445 can be transmitted or received over the network 1445 via a communication port or communication interface 1450 or using the bus 1415. The communication interface 1450 can be a part of the processor 1405 or can be a separate component. The communication interface 1450 can be created in software or can be a physical connection in hardware. The communication interface 1450 can be configured to connect with the network 1445, external media, the display 1420, or any other components in the electronic device 1400 or combinations thereof. The connection with the network 1445 can be a physical connection, such as a wired Ethernet connection or can be established wirelessly as discussed later. Likewise, the additional connections with other components of the electronic device 1400 can be physical connections or can be established wirelessly. The network 1445 can alternatively be directly connected to the bus 1415.

The network 1445 can include wired networks, wireless networks, Ethernet AVB networks, or combinations thereof. The wireless network can include a cellular telephone network, an 802.11, 802.16, 802.20, 802.1Q or WiMax network. Further, the network 1445 can be a public network, such as the Internet, a private network, such as an intranet, or combinations thereof, and can utilize a variety of networking protocols now available or later developed including, but not limited to TCP/IP based networking protocols.

In an alternative example, dedicated hardware implementations, such as application specific integrated circuits, programmable logic arrays and other hardware devices, can be constructed to implement various parts of the electronic device 1400.

The electronic device 1400 can also include an image capturing device 1455. The image capturing device 1455 can be used to capture still images, for example the first still image 220, the second still image 320, and the third still image 420, as illustrated in FIGS. 2A to 4B, respectively. If the image capturing device 1455 is in the user device, the image capturing device 1455 is configured to only transmit information, for example, to the footwear recommendation system 108.

One or more examples described can implement functions using two or more specific interconnected hardware modules or devices with related control and data signals that can be communicated between and through modules, or as portions of an application-specific integrated circuit. Accordingly, the present system encompasses software, firmware, and hardware implementations.

The system described can be implemented by software programs executable by an electronic device. Further, in a non-limited example, implementations can include distributed processing, component/object distributed processing, and parallel processing. Alternatively, virtual electronic device processing can be constructed to implement various parts of the system.

The system is not limited to operation with any particular standards and protocols. For example, standards for Internet and other packet switched network transmission (for example, TCP/IP, UDP/IP, HTML, HTTP) can be used. Such standards are periodically superseded by faster or more efficient equivalents having essentially the same functions. Accordingly, replacement standards and protocols having the same or similar functions as those disclosed are considered equivalents thereof.

Various embodiments disclosed herein provide numerous advantages by providing a method of recommending fitting footwear and a footwear recommendation system thereof. The present invention enables a user to browse through a wider variety of footwear than in a physical store through an electronic commerce website. The user also experiences virtual fitting of the footwear which is comparable to fittings at the physical store. The present invention can significantly increase electronic commerce of the footwear category. Further, one or more components of the footwear recommendation system can be used in custom footwear design, 3D printing of shoes and insoles, in podiatry for designing custom made orthotics and custom footwear, and the like.

While specific language has been used to describe the disclosure, any limitations arising on account of the same are not intended. As would be apparent to a person in the art, various working modifications may be made to the method in order to implement the inventive concept as taught herein.

The figures and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is given by the following claims.

## Claims

1. A computer-implemented method of recommending fitting footwear, the method comprising:
receiving (601),
by a footwear recommendation system, a plurality of still images associated with at least one foot of a user, wherein the plurality of still images are received from a user device operated by the user, at least one still image of the plurality of still images comprising information of a standard reference object placed proximate to the at least one foot of the user, wherein the standard reference object is associated with one or more standard dimensions, and the plurality of still images are captured by the user from one or more angles;
processing (604),
by the footwear recommendation system, the plurality of still images to generate a digital geometric profile, the digital geometric profile representing one of a two and a half dimensional 2.5D model and a two dimensional 2D model of the at least one foot of the user, wherein processing the plurality of still images comprises the steps of:
identifying (704, 706) the standard reference object in the at least one still image of the plurality of still images, the at least one foot of the user in the plurality of still images and one or more regions of the at least one foot in the plurality of still images;
eliminating (708) a shadow noise in the one or more regions of the at least one foot of the user;
detecting (710) a plurality of foot feature points relevant to the digital geometric profile;
applying (712) a perspective correction method to the plurality of still images to correct perspective distortion;
generating (714), by the footwear recommendation system, the 2D or 2.5D model of the at least one foot of the user;
applying (716) a statistical regression model to the 2D or 2.5D model of the at least one foot of the user; and
generating (718) the digital geometric profile representing the 2D or 2.5D model, the digital geometric profile being generated by combining data from the plurality of still images based on applying the perspective correction method and the statistical regression model;
extracting (606), by the footwear recommendation system, a set of foot measurements from the digital geometric profile to classify the digital geometric profile into a foot type, the foot type comprising a plurality of shapes and proportions of the at least one foot, the digital geometric profile and the foot type together being stored in a foot geometric profile database as a foot geometric profile, wherein classifying the digital geometric profile into a foot type includes applying, by the footwear recommendation system, a set of rules to one or more foot measurements of the set of foot measurements to derive the foot type;
storing, by the footwear recommendation system, the foot geometric profile of the user along with the unique identifier for the user, the foot geometric profile comprising the set of foot measurements and the foot type of the user;
identifying (608), by the footwear recommendation system, at least one fitting footwear for the user based on the digital geometric profile, the digital geometric profile being compared with a plurality of footwear profiles stored in a footwear profile database; and
initiating (610), by the footwear recommendation system, display of the at least one fitting footwear on the user device, the at least one fitting footwear further being displayed along with fit information and a fit quality score of the at least one fitting footwear in response to a user request.

2. The method as claimed in claim 1 and further comprising:
receiving user profile information of the user along with the plurality of still images to determine a unique identifier for the user.

3. The method as claimed in claim 1, wherein the plurality of footwear profiles are stored in the footwear profile database by generating the footwear profile of each footwear of the plurality of footwear, wherein generation of the footwear profile comprising steps of:
generating a three dimensional 3D contour map, wherein the 3D contour map is generated by one of
converting a 3D model of one of an inner cavity and a footwear last of the footwear, the 3D model being one of received from a manufacturer and generated using a 3D scan, and
digitizing one of the inner cavity and the footwear last of the footwear; extracting a plurality of footwear measurements from the 3D contour map;
applying one or more rules to at least one footwear measurement of the plurality of footwear measurements to derive a footwear type, the plurality of footwear measurements and the footwear type together being stored in a footwear profile database as a footwear geometric profile; and
capturing one or more footwear attributes associated with the footwear;
storing the footwear geometric profile and the one or more footwear attributes along with a unique identifier for the footwear in the footwear profile database as the footwear profile.

4. The method as claimed in claim 1, wherein identifying the at least one fitting footwear comprises:
reading, by the footwear recommendation system, the foot geometric profile database storing the digital geometric profile and the foot type, and the footwear profile database;
filtering, by the footwear recommendation system, a set of footwear from the plurality of footwear in the footwear profile database based on a plurality of user search parameters, the digital geometric profile, the foot type, and a set of rules;
applying, by the footwear recommendation system, a plurality of rules to select the at least one fitting footwear from the set of footwear based on user preferences of the user, and to generate the fit information and the fit quality score of the at least one fitting footwear;
ranking, by the footwear recommendation system, the at least one fitting footwear for display to the user; and
initiating, by the footwear recommendation system, display of the fit information and the fit quality score along with the at least one fitting footwear on the user device, wherein the fit information is customized for the user and the at least one fitting footwear.

5. A footwear recommendation system for recommending fitting footwear, the footwear recommendation system comprising:
a communication interface in electronic communication with at least one user device operated by a user;
a memory that stores instructions;
a processor responsive to the instructions to carry out the method of any of claims 1-4.

## Patentansprüche

1. Computerimplementiertes Verfahren, um passende Schuhe zu empfehlen, wobei das Verfahren Folgendes umfasst:
den Erhalt (601) von
einer Vielfalt von Standbildern durch ein Schuhwerkempfehlungssystem, die mit mindestens einem Fuß eines Benutzers verknüpft sind, wobei die Vielfalt von Standbildern von einer durch den Benutzer bedienten Benutzervorrichtung erhalten wird, wobei mindestens ein Standbild der Vielfalt Informationen über ein Standardreferenzobjekt umfasst, das in der Nähe des mindestens einen Fußes des Benutzers positioniert wird, wobei das Standardreferenzobjekt einer oder mehreren Standarddimensionen zugeordnet ist, und die Vielfalt von Standbildern vom Benutzer aus einer oder mehreren Winkeln erfasst wird;
die Verarbeitung (604) von
der Vielfalt von Standbildern durch das Schuhwerk-Empfehlungssystem, ein digitales geometrisches Profil zu erstellen, wobei das digitale geometrische Profil eines von einem zweieinhalbdimensionalen Modell und einem zweidimensionalen Modell des mindestens einen Fuß des Benutzers darstellt, wobei das Verarbeiten von der Vielfalt von Standbildern die folgenden Schritte umfasst:
die Identifizierung (704, 706) von
dem Standardreferenzobjekt in mindestens einem Standbild der mehreren Standbildern, mindestens einem Fuß des Benutzers in den mehreren Standbildern und einem oder mehreren Bereichen des mindestens einen Fußes in den mehreren Standbildern;
die Eliminierung (708) von
einem Schattenrauschen in der einen oder mehreren Regionen des mindestens einen Fußes des Benutzers;
die Erfassung (710) von
einer Vielfalt von Fußmerkmalspunkten, die für das digitale geometrische Profil relevant sind;
die Anwendung (712) von
einem perspektivischen Korrekturverfahren für die Vielfalt von Standbildern, um perspektivische Verzerrung zu korrigieren;
die Erstellung (714) von,
durch das Schuhwerkempfehlungssystem, dem 2D- oder 2,5D-Modell des mindestens einen Fußes des Benutzers;
die Anwendung (716) von
einem statistischen Regressionsmodell zum 2D- oder 2,5D-Modell des mindestens einen Fußes des Benutzers; und
die Erstellung (718) von
dem digitalen geometrischen Profil, das das 2D- oder 2,5D-Modell darstellt, wobei das digitale geometrische Profil durch Kombinieren von Daten aus der Vielfalt von Standbildern erstellt wird, basierend auf der Anwendung des perspektivischen Korrekturverfahrens und des statistischen Regressionsmodells;
das Extrahieren (606) von
einer Reihe von Fußmaßen vom digitalen geometrischen Profil durch das Schuhempfehlungssystem, um das digitale geometrische Profil in einen Fußtyp zu klassifizieren, wobei der Fußtyp
eine Vielfalt von Formen und Proportionen des mindestens einen Fußes umfasst, wobei das digitale geometrische Profil und der Fußtyp zusammen in einer Datenbank für geometrische Fußprofile als ein geometrisches Fußprofil gespeichert werden, wobei das Klassifizieren vom digitalen geometrischen Profil in einen Fußtyp das Anwenden eines Regelwerkes zu einem oder mehreren Fußmaßsätzen auf eine oder mehrere Fußmessungen durch das Schuhwerkempfehlungssystem umfasst, um den Fußtyp abzuleiten;
die Speicherung von dem geometrischen Fußprofil des Benutzers durch das Schuhwerkempfehlungssystem zusammen mit der eindeutigen Kennung für den Benutzer, wobei das geometrische Fußprofil den Satz von Fußmaßen und den Fußtyp des Benutzers umfasst;
die Identifizierung (608) von
mindestens einem passenden Schuhwerk für den Benutzer durch das Schuhempfehlungssystem basierend auf dem digitalen geometrischen Profil, wobei das digitale geometrische Profil mit einer Vielfalt von Schuhwerkprofilen verglichen wird, die in einer Schuhwerkprofildatenbank gespeichert sind; und
die Einleitung (610) von
der Anzeige von mindestens einem passenden Schuhwerk auf dem Benutzergerät durch das Schuhwerk-Empfehlungssystem, wobei das mindestens ein passendes Schuhwerk zusammen mit Passforminformationen und einer Passformqualitätsbewertung von mindestens einem passenden Schuhwerk als Reaktion auf eine Benutzeranfrage weiter angezeigt wird.

2. Das Verfahren nach Anspruch 1 umfasst weiter:
den Erhalt von Benutzerprofilinformationen des Benutzers zusammen mit der Vielfalt von Standbildern, um eine eindeutige Kennung für den Benutzer zu bestimmen.

3. Das Verfahren nach Anspruch 1, wobei die Vielfalt von Schuhwerkprofilen in der Schuhwerkprofildatenbank gespeichert, indem das Schuhwerkprofil jedes Schuhwerks der Vielfalt von Schuhwerken erstellt wird, wobei die Erstellung des Schuhwerkprofils die folgenden Schritte umfasst:
die Erstellung von einer dreidimensionalen Konturkarte, wobei die 3D-Konturkarte durch das Konvertieren eines 3D-Modells eines Innenhohlraums oder eines Schuhleistens der Schuhwerk erstellt wird, wobei das 3D-Modell eines von einem Hersteller ist und mithilfe eines 3D-Scans erstellt wurde, und
das Digitalisieren des Innenhohlraums oder des Schuhwerk-Leistens des Schuhwerks;
das Extrahieren einer Vielfalt von Schuhwerkmessungen aus der 3D-Konturkarte;
das Anwenden einer oder mehrerer Regeln auf mindestens ein Schuhwerkmaß der Vielfalt von Schuhwerkmaßen, um einen Schuhwerkstyp abzuleiten, wobei die Vielfalt von Schuhwerksmaßen und der Schuhwerkstyp zusammen in einer Schuhwerksprofildatenbank als ein geometrisches Schuhwerksprofil gespeichert werden; und
das Erfassen eines oder mehrerer Schuhwerkattribute, die dem Schuhwerk zugeordnet sind;
die Speicherung des geometrischen Schuhwerkprofils und des einen oder der mehreren Schuhwerkattribute zusammen mit einer eindeutigen Kennung für das Schuhwerk in der Schuhwerkprofildatenbank als Schuhwerkprofil.

4. Das Verfahren nach Anspruch 1, wobei die Identifizierung von mindestens einem passenden Schuhwerk Folgendes umfasst:
Lesen, durch das Schuhwerk-Empfehlungssystem, vom Datenbank mit geometrischen Fußprofilen, die das digitale geometrische Profil und den Fußtyp speichert, und der Schuhwerkprofil-Datenbank;
Filtern, durch das Schuhwerkempfehlungssystem, von einem Schuhwerksatz aus der Vielfalt von Schuhwerken in der Schuhwerkprofildatenbank basierend auf einer Vielfalt von Benutzersuchparametern, dem digitalen geometrischen Profil, dem Fußtyp und einem Regelwerk;
Anwendung einer Vielfalt von Regeln durch das Schuhwerkempfehlungssystem, um das mindestens eine passende Schuhwerk aus dem Schuhwerksatz basierend auf Benutzerpräferenzen des Benutzers auszuwählen, und um die Passforminformationen und die Passformqualitätsbewertung des mindestens einen passenden Schuhwerks zu erstellen;
Einordnen von mindestens einem passenden Schuhwerk durch das Schuhwerk-Empfehlungssystem zur Anzeige für den Benutzer; und
Einleitung der Anzeige der Passforminformationen und der Passformqualitätsbewertung durch das Schuhwerkempfehlungssystem zusammen mit dem mindestens einen passenden Schuhwerk auf dem Benutzergerät, wobei die Passforminformationen für den Benutzer und das mindestens eine passende Schuhwerk angepasst werden.

5. Schuhwerkempfehlungssystem, um passendes Schuhwerk zu empfehlen, wobei das Schuhwerkempfehlungssystem Folgendes umfasst:
eine Kommunikationsschnittstelle in elektronischer Kommunikation mit mindestens einem Benutzergerät, das von einem Benutzer betrieben wird;
einen Speicher, der Anweisungen speichert;
einen Prozessor, der auf die Anweisungen reagiert, um das Verfahren nach einem der Ansprüche 1-4 auszuführen.

## Revendications

1. Procédé mis en œuvre par ordinateur pour recommander l'ajustement de chaussures, le procédé comprenant :
réception (601), par un système de recommandation de chaussures, une pluralité d'images fixes associées à au moins un pied d'un utilisateur, dans lequel la pluralité d'images fixes sont reçues d'un dispositif utilisateur actionné par l'utilisateur, au moins une image fixe de la pluralité d'images fixes comprenant des informations d'un objet de référence standard placé à proximité du au moins un pied de l'utilisateur, dans lequel l'objet de référence standard est associé à une ou plusieurs dimensions standard, et la pluralité d'images fixes est capturée par l'utilisateur sous un ou plusieurs angles;
traitement (604), par le système de recommandation de chaussures, de la pluralité d'images fixes pour générer un profil géométrique numérique, le profil géométrique numérique représentant l'un d'un modèle en deux dimensions et demie 2.5 D et un modèle en deux dimensions 2D Modèle d'au moins un pied de l'utilisateur, dans lequel le traitement de la pluralité d'images fixes comprend les étapes consistant à:
identifiant (704, 706), l'objet de référence standard dans l'au moins une image fixe de la pluralité d'images fixes, le au moins un pied de l'utilisateur dans la pluralité d'images fixes et une ou plusieurs régions du au moins un pied dans la pluralité d'images fixes images;
éliminer (708) un bruit d'ombre dans la ou les régions du au moins un pied de l'utilisateur;
détection de (710) une pluralité de points caractéristiques de pied relatifs au profil géométrique numérique ;
appliquer (712) un procédé de correction de perspective appliqué à la pluralité d'images fixes pour corriger la distorsion de perspective;
générer (714) par le système de recommandation de chaussures, le modèle 2D ou 2.5D du au moins un pied de l'utilisateur;
application (716) un modèle de régression statistique vers le modèle 2D ou 2.5D d'au moins un pied de l'utilisateur; et
générer (718) le profil géométrique numérique représentant le modèle 2D ou 2,5D, le profil géométrique numérique étant généré en combinant les données de la pluralité d'images fixes des images basées sur l'application de la méthode de correction de perspective et du modèle de régression statistique;
extraction (606) par le système de recommandation de chaussures, un ensemble de mesures du pied du profil géométrique numérique pour classer le profil géométrique numérique en un type de pied, le pied type comprenant une pluralité de formes et de proportions du au moins un pied, le profil géométrique numérique et le type de pied étant stockés ensemble dans une base de données de profils géométriques de pied en tant que profil géométrique de pied, dans lequel la classification du profil géométrique numérique en un type de pied comprend l'application, par le système de recommandation de chaussures, un ensemble de règles pour une ou plusieurs mesures de pied de l'ensemble de mesures de pied pour dériver le type de pied;
mémoriser, par le système de recommandation de chaussures, le profil géométrique du pied de l'utilisateur ainsi que l'identifiant unique de l'utilisateur, le profil géométrique du pied comprenant l'ensemble des mesures du pied et le type de pied de l'utilisateur;
identifiant (608) par le système de recommandation de chaussures, au moins une chaussure adaptée à l'utilisateur sur la base du profil géométrique numérique, le profil géométrique numérique étant comparé à une pluralité de profils de chaussures stockés dans une base de données de profils de chaussures; et
initier (610) par le système de recommandation de chaussures, l'affichage de la ou des chaussures adaptées sur le dispositif utilisateur, la ou les chaussures adaptées étant en outre affichées avec des informations d'ajustement et un score de qualité d'ajustement de la ou des chaussures adaptées en réponse à un demande de l'utilisateur.

2. Procédé selon la revendication 1 et comprenant en outre :
recevoir des informations de profil d'utilisateur de l'utilisateur avec la pluralité d'images fixes pour déterminer un identifiant unique pour l'utilisateur.

3. Procédé selon la revendication 1, dans lequel la pluralité de profils de chaussures est stockée dans la base de données de profils de chaussures en générant le profil de chaussures de chaque chaussure de la pluralité de chaussures, la génération du profil de chaussures comprenant les étapes consistant à:
générer un 3D en trois dimensions carte de contour, (3D) dans laquelle la carte de contour 3D est générée par l'une des conversions d'un modèle 3D d'une cavité interne et d'une forme de chaussure de la chaussure, le modèle 3D étant l'un reçu d'un fabricant et généré à l'aide d'un balayage 3D, et numérisant l'une de la cavité intérieure et de la forme de chaussure de la chaussure ; extraire une pluralité de mesures de chaussures de la carte de contour 3D;
appliquer une ou plusieurs règles à au moins une mesure de chaussures parmi la pluralité de mesures de chaussures pour dériver un type de chaussures, la pluralité de mesures de chaussures et le type de chaussures étant stockés ensemble dans une base de données de profils de chaussures en tant que profil géométrique de chaussures; et
capturer un ou plusieurs attributs de chaussures associés aux chaussures ; stocker le profil géométrique de la chaussure et le ou les attributs de la chaussure avec un identifiant unique pour la chaussure dans la base de données de profil de la chaussure en tant que profil de la chaussure.

4. Procédé selon la revendication 1, dans lequel l'identification de la au moins une chaussure de montage comprend:
lire, par le système de recommandation de chaussures, la base de données de profils géométriques de pied mémorisant le profil géométrique numérique et le type de pied, et la base de données de profils de chaussures;
filtrer, par le système de recommandation de chaussures, un ensemble de chaussures à partir de la pluralité de chaussures dans la base de données de profils de chaussures sur la base d'une pluralité de paramètres de recherche d'utilisateur, du profil géométrique numérique, du type de pied et d'un ensemble de règles;
appliquer, par le système de recommandation de chaussures, une pluralité de règles pour sélectionner l'au moins une chaussure ajustée dans l'ensemble de chaussures sur la base des préférences de l'utilisateur de l'utilisateur, et pour générer les informations d'ajustement et le score de qualité d'ajustement de l'au moins un ajustement chaussure;
classer, par le système de recommandation de chaussures, la ou les chaussures adaptées à présenter à l'utilisateur ; et lancer, par le système de recommandation de chaussures, l'affichage des informations d'ajustement et du score de qualité d'ajustement avec l'au moins une chaussure ajustée sur le dispositif utilisateur, les informations d'ajustement étant personnalisées pour l'utilisateur et la au moins une chaussure ajustée.

5. Système de recommandation de chaussures pour recommander des chaussures adaptées, le système de recommandation de chaussures comprenant:
une interface de communication en communication électronique avec au moins un dispositif utilisateur exploité par un utilisateur ;
une mémoire qui stocke des instructions ;
un processeur répondant aux instructions pour exécuter le procédé de l'une quelconque des revendications 1 à 4.
